Europäisches Patentamt

European Patent Office

Office européen des brevets

(19)

(11) **EP 0 691 065 B1**

(12) **FASCICULE DE BREVET EUROPEEN**

(45) Date de publication et mention
de la délivrance du brevet:
**05.06.2002 Bulletin 2002/23**

(51) Int Cl.⁷: **H04N 7/24**, H04N 7/32

(21) Numéro de dépôt: **94909148.2**

(86) Numéro de dépôt international:
**PCT/FR94/00239**

(22) Date de dépôt: **04.03.1994**

(87) Numéro de publication internationale:
**WO 94/22267 (29.09.1994 Gazette 1994/22)**

(54) **CODAGE/DECODAGE COMPATIBLES SOUS-BANDES D'IMAGES DE TELEVISION**

KOMPATIBLE TEILBANDKODIERUNG/DEKODIERUNG VON FERNSEHBILDERN

COMPATIBLE TELEVISION PICTURE SUB-BAND CODING/DECODING

(84) Etats contractants désignés:
**DE ES FR GB IT**

(30) Priorité: **16.03.1993 FR 9303010**

(43) Date de publication de la demande:
**10.01.1996 Bulletin 1996/02**

(73) Titulaire: **THOMSON multimedia
92648 Boulogne Cédex (FR)**

(72) Inventeurs:
• **KESSLER, Damien THOMSON-CSF SCPI
F-92402 Courbevoie Cédex (FR)**
• **DELVIN, Bruce THOMSON-CSF SCPI
F-92402 Courbevoie Cédex (FR)**
• **BOUCHEROK, Fadila THOMSON-CSF SCPI
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 262 109          EP-A- 0 405 754
EP-A- 0 460 997          FR-A- 2 648 590
US-A- 4 853 779          US-A- 4 969 040**

• **EBU TECHNICAL REVIEW no. 251 , 21 Mars 1992
, BRUSSELS, BE pages 34 - 44 XP275389 J. MAU
ET AL. 'Sub-Band Source Coding for HDTV'**
• **TREIZIEME COLLOQUE SUR LE TRAITEMENT
DU SIGNAL ET DES IMAGES 16 Septembre 1991
, JUAN-LES-PINS, FR pages 893 - 896 XP242920
J. MAU 'Système de Codage Numerique en
Sous-Bandes Multistandard et Compatible'**

## Description

La présente invention concerne un codeur-décodeur pour un codage compatible sous-bande d'images de télévision et son application au codage de mouvement hiérarchique par des structures arborescentes.

Elle s'applique aux systèmes de transmission numérique et notamment, à la transmission de séquences d'images numériques.

Les récents progrès technologiques en matière de transmission numérique ainsi que le développement de réseaux numériques large bande ont rendu stratégique le rôle de la compression numérique. Alors que les débits alloués pour la transmission des données ne cessent de diminuer, l'exigence en matière de qualité de codage s'accroît. Ainsi, pour la transmission de séquences d'images numériques, les algorithmes développés nécessitent l'utilisation de techniques de plus en plus perfectionnées et complexes, le plus souvent basées sur une exploitation de la redondance temporelle avec estimation du mouvement. C'est le cas par exemple du codage bidirectionnel, du "frame skip" dénomination anglo-saxonne définissant une technique de saut d'images, ou des techniques d'interpolation temporelle.

Ces techniques entraînent cependant l'apparition de nouvelles contraintes vis-à-vis de l'estimation de mouvement. Le codage bidirectionnel nécessite de pouvoir estimer des mouvements de forte amplitude, surtout si les images traitées sont au format Haute Définition (HD). Le "frame skip" et l'interpolation temporelle demandent des champs de vecteurs précis et aussi proches du champ physique que possible. De plus, comme l'information de mouvement à transmettre devient importante, il est impératif de réduire au maximum le coût de codage du champ de mouvement : le moyen le plus efficace pour cela est de le rendre le plus homogène possible. Précision, homogénéité, fortes amplitudes et adéquation au champ physique sont les principales caractéristiques à prendre en compte par l'estimateur de mouvement.

La plupart des codeurs-décodeurs d'images connus utilisent un codage par transformée cosinus discrète, connu sous l'abréviation anglo-saxonne DCT fonctionnant en mode intra et inter avec une technique d'estimation de mouvement de type "block matching" dénomination anglo-saxonne d'une technique suivant laquelle l'image est découpée en blocs, un vecteur mouvement par bloc étant déterminé par un calcul de corrélation, cette technique permettant d'obtenir des vecteurs mouvements calculés en nombres entiers de pixels, ou plus rarement de type "pel-récursif", ou pel est l'abréviation pour pixel, développé notamment dans "Motion estimation and compensation for image sequence coding", publié dans "Image Communication 4, 1992, pp 161-174". Le pel-récursif ne permet pas d'atteindre une précision suffisante au niveau du mouvement des contours et reste trop sensible au bruit.

Une technique plus répandue et donnant des meilleurs résultats en terme de réduction de l'erreur de prédiction est la technique connue sous la dénomination anglo-saxonne "block matching full search". Cette technique ne permet cependant pas l'estimation des mouvements de forte amplitude : l'augmentation de la fenêtre de recherche est rapidement limitée par les considérations d'implémentation dans les matériels. De plus, la technique "full search" ne prend pas en compte la corrélation spatiale entre les vecteurs issus de blocs adjacents, ce qui se traduit souvent par un champ bruité et éloigné du mouvement réel. Un accroissement de la taille de la fenêtre de recherche ne peut qu'accentuer l'inhomogénéité du champ estimé et, par conséquent, son coût de codage non négligeable à bas débit. La technique "full search" n'est donc plus adaptée aux nouvelles contraintes.

Des techniques "block matching" plus complexes mais plus rapides et autorisant des excursions de vecteurs plus importantes ont été développées dans plusieurs articles et notamment dans une publication de Q. Wang and R. J. Clarke intitulée "Motion estimation and compensation for image sequence coding" parue dans "Image Communication 4, 1992, pp.161-174", et dans une publication de L.Lee, J.WANG, J. Lee et J. Shie intitulée "Dynamic Search Window Adjustment and Interlaced Search for Block Matching Algorithm" parue dans "International Workshop on HDTV'93, Proceedings vol.2, Nov.1992, Kawasaki".

Le but de ces techniques est de réduire au maximum le nombre de positions testées par bloc. L'intérêt de ces méthodes est d'éviter une recherche exhaustive. Cependant elles n'assurent pas une plus grande cohérence du champ de mouvement et, au contraire, augmentent les possibilités de divergence de l'estimateur de mouvement. Les techniques d'estimation hiérarchique quant à elles permettent de satisfaire les contraintes définies précédemment sur le codage du champ de mouvement. Elles sont par exemple décrites dans la demande de brevet européen n°0460997.

Un type de codec, abréviation pour codeur-décodeur, connu utilisant ces techniques de codage et d'estimation comporte une structure compatible à deux boucles de prédiction afin d'éviter une dérive entre le codeur pleine résolution de la première boucle appelé codeur TVHD, abréviation pour Télévision Haute Définition, et le décodeur quart de résolution de la deuxième boucle, appelé décodeur TV, abréviation pour Télévision sous entendu de type «standard ». Une telle structure est développée dans une publication intitulée « draft Specification of a TV/HDTV Compatible Coding Scheme », publiée dans « Document CMTT/2-SRG, July 1992 ».

Le principe du codage utilisé par ce codec consiste à décomposer le spectre d'une image source en sous-bandes, chaque bande étant codée séparément. Dans un premier temps le codec choisit le mode de codage, intra ou inter, puis quantifie la bande elle-même pour le mode intra, ou l'erreur de prédiction pour cette bande pour le mode inter.. Les bandes sont ensuite transmises l'une après l'autre, dans l'ordre, via un canal de transmission après codage par VLC, abréviation pour l'expression anglo saxonne « Variable Length Coding ».

En mode de prédiction inter, le codec reconstruit deux images de résolutions différentes à partir des coefficients transmis : une image pleine résolution dans la boucle TVHD et une image quart de résolution dans la boucle TV. L'image pleine résolution est obtenue grâce à un banc de filtres de synthèse utilisant toutes les bandes de fréquences transmises. L'image quart de résolution n'utilise qu'un quart des sous-bandes transmises.

Ces deux images décodées sont ensuite stockées en mémoire et utilisées pour fournir la prédiction inter pour l'image source suivante après estimation et compensation de mouvement entre l'image décodée précédente et l'image source courante. Les deux images sont ensuite recalées et décomposées en sous-bandes : la boucle TV fournit un quart des sous-bandes, correspondant aux basses fréquences et le reste des sous-bandes provient de la boucle TVHD.

Dans ce type de codec, l'image compatible quart de résolution est recalée pour la prédiction inter en utilisant les vecteurs estimés entre les images pleine résolution, après une mise à l'échelle. Cependant le recalage correspondant, s'il est bien adapté au niveau pleine résolution, ne l'est pas forcément au niveau quart de résolution.

De plus, tous les vecteurs mouvement transmis pour l'image pleine résolution, doivent être également décodés par le décodeur compatible, ce qui augmente considérablement le débit correspondant à la partie compatible pour de faibles débits.

L'article de Mau et al, de l' « EBU Technical Review » de printemps 1992 et intitulé « Sub-band source coding for HDTV » propose d'effectuer une estimation de mouvement après un découpage sous-bandes. La prise en compte des sous-bandes est ici liée à un problème de précision de vecteur mouvement et ce vecteur mouvement n'est pas optimisé pour l'ensemble de signaux codés.

Le but de l'invention est de pallier les inconvénients précités.

A cet effet, l'invention a pour objet un codeur-décodeur pour un codage compatible sous-bande d'un signal vidéo comportant un circuit principal de codage comprenant un premier banc de filtres d'analyse du signal vidéo, un soustracteur pour la soustraction du signal filtré avec un signal prédit, un circuit de codage du signal différence pour obtenir le signal codé, un circuit de décodage pour le décodage local du signal codé, un additionneur du signal prédit au signal décodé, au moins deux boucles de prédiction relatives à des résolutions d'images différentes, chacune des boucles comportant un banc de filtres de synthèse recevant le signal addition, une mémoire pour la mémorisation du signal addition filtré, un compensateur de mouvement recevant le signal mémorisé, le mouvement étant calculé à partir d'un estimateur de mouvement, un deuxième banc de filtres d'analyse recevant le signal compensé en mouvement, l'ensemble des signaux compensés ainsi filtrés fournissant le signal prédit, caractérisé en ce qu'il comporte des moyens pour générer des images courantes de résolutions différentes, celles des images mémorisées dans les boucles de prédiction et en ce que l'estimateur de mouvement reçoit sur une première pluralité d'entrées, les images mémorisées dans les boucles de prédiction formant ainsi une première pyramide d'images multirésolution et sur une deuxième pluralité d'entrée, les images courantes de résolutions correspondantes formant ainsi une deuxième pyramide d'images multirésolution, pour effectuer une estimation de mouvement hiérarchique en exploitant les images reçues de résolutions différentes en propageant le vecteur mouvement calculé pour une résolution donnée au niveau de résolution supérieure.

L'invention a pour avantage qu'elle permet, d'une part, de s'appuyer sur une structure connue d'un codec double boucle pour la génération d'une pyramide multirésolution, et permet d'autre part, d'améliorer les performances du codec en matière de qualité d'images à un débit donné, notamment au niveau de la partie compatible.

D'autres caractéristiques et avantages de l'invention apparaîtront dans la description qui suit faite en regard des dessins annexés qui représentent :

- la figure 1, un mode de réalisation d'un codeur-décodeur selon l'invention, et
- la figure 2, une représentation à deux dimensions d'une partie d'une pyramide d'images illustrant un choix de prédicteurs spatiaux par un estimateur de mouvement hiérarchique utilisé par le codeur-décodeur selon l'invention.

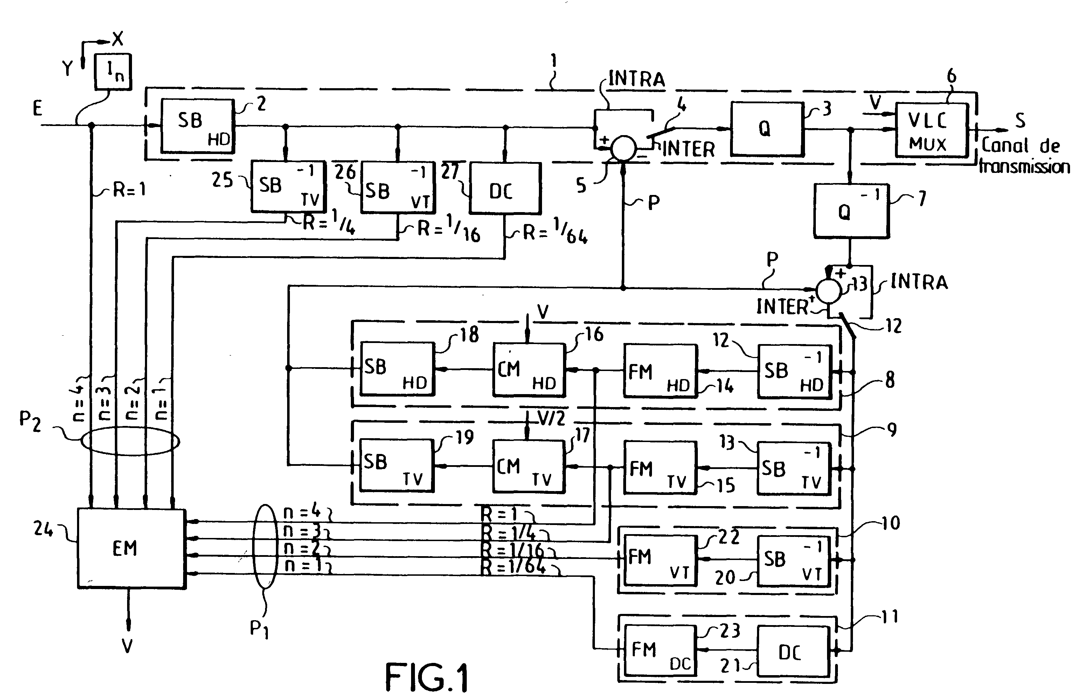

Un mode de réalisation d'un codeur-décodeur, ou codec, à quatre niveaux de résolution selon l'invention, incorporant un estimateur de mouvement hiérarchique multirésolution, est représenté par la figure 1.

Ce mode de réalisation utilise le principe de décomposition en sous-bandes développé dans une publication intitulée "Perfect Reconstruction Modulated Filter Banks" de J. Mau, publiée dans "ICASSP, March 1992, San Francisco".

Une décomposition d'une image en sous-bandes s'obtient à l'aide d'une structure parallèle basée sur l'utilisation de bancs de filtres séparables à deux dimensions. De tels bancs comportent des filtres d'analyse et des filtres de synthèse. Les bancs de filtres d'analyse décomposent une image en un nombre déterminé M de bandes suivant les directions horizontale X et verticale Y de l'image, définissant respectivement un nombre M de lignes et M de colonnes. L'aspect séparable des filtres permet de traiter indépendamment les lignes et les colonnes de l'image. Pour une découpe d'une image en sous-bandes MxM, le banc de filtres d'analyse est monodimensionnel et décompose en M sous-bandes successivement les lignes puis les colonnes de l'image. Les sous-bandes sont sous-échantillonnées par le nombre de bandes M dans chaque direction X et Y.

De la même façon, la reconstruction de l'image s'obtient à l'aide d'un banc comportant un nombre M de filtres de synthèse monodimensionnel correspondant au nombre M de sous-bandes, et d'une interpolation par un facteur déterminé du nombre de sous-bandes M. Les filtres d'analyse et de synthèse sont calculés en modulant un même filtre prototype passe-bas à phase linéaire ; les phases de modulation à l'analyse et à la synthèse sont opposées afin d'éliminer le repliement de spectre lors de la reconstruction de l'image.

A partir d'une décomposition de l'image pleine résolution en MxM sous-bandes, le codec selon l'invention reconstruit une sous-image quart de résolution, à condition que M soit pair. Pour cela, le codec sélectionne les M/2xM/2 sous-bandes qui correspondent à ce niveau de résolution, les sous-bandes correspondant aux basses fréquences, et calcule un banc de synthèse déduit simplement du banc de synthèse pleine résolution. Le banc des M/2 filtres de synthèse s'obtient en modulant une version sous-échantillonnée par deux du filtre prototype d'origine pour la découpe en M sous-bandes. Si M est une puissance de 2, le processus est réitéré et génère des sous-images au seizième de résolution, etc... jusqu'à l'utilisation du banc de synthèse 1x1.

Le mode de réalisation d'un codec selon l'invention comporte un circuit principal de codage 1 délimité par une ligne fermée discontinue. Ce circuit permet d'envoyer sur un canal de transmission soit, en mode intra, une image source courante $I_n$ codée, soit en mode inter, un signal d'erreur codé résultant de la différence entre l'image source courante $I_n$ et une image issue d'une prédiction faite à partir de l'image décodée précédente $I_{n-1}$.

Le circuit principal comporte de l'entrée E vers la sortie S, un premier banc de filtres d'analyse haute définition, ou banc d'analyse HD 2, recevant sur son entrée l'image source courante $I_n$, et délivrent sur sa sortie la même image pleine résolution décomposée en 64 bandes, 8 bandes suivant la direction horizontale X et la direction Y de l'image. La sortie du banc d'analyse HD 2 est soit couplée directement à l'entrée d'un circuit de quantification, ou quantificateur 3, par l'intermédiaire d'un commutateur 4 en position "mode intra" sélectionnée par le codec, soit couplée à une première entrée d'opérande d'un opérateur de soustraction, ou soustracteur 5, dont la sortie est couplée à l'entrée du quantificateur 3 par l'intermédiaire du commutateur 4 en position "mode inter" sélectionné par le codec.

La sortie du quantificateur 3 délivrant soit l'image HD décomposée et quantifiée, en mode intra, soit le signal d'erreur quantifié, en mode inter, est couplée d'une part sur une première entrée d'un dispositif de codage à longueur variable, ou VLC 6, incorporant un multiplexeur, MUX, et dont la sortie est couplée au canal de transmission, et couplée d'autre part à l'entrée d'un circuit de déquantification, ou déquantificateur 7, dont la sortie est soit couplée directement à l'entrée de quatre boucles de codage 8 à 11, représentées respectivement à l'intérieur d'une ligne fermée discontinue, par l'intermédiaire d'un deuxième commutateur 12 en position "mode intra" sélectionné par le codec, soit couplée à une première entrée d'opérande d'un opérateur d'addition, ou additionneur 13, dont la sortie est couplée à l'entrée des quatre boucles de codage 8 à 11 respectivement dénommée par leur format HD, TV, VT et DC signifiant respectivement, format haute définition, format télévision, format vidéotéléphone et format "direct current" signifiant que la moyenne du signal est nulle, par l'intermédiaire du deuxième commutateur 12 en position mode "inter" sélectionnée par le codec.

Chaque boucle 8 à 11 délivre une image reconstituée à partir de l'image décodée précédente $I_{n-1}$ et construit respectivement une image pleine résolution au format HD, une image 1/4 de résolution au format TV, une image 1/16 de résolution au format VT, et une image 1/64 de résolution au format DC. La première et la deuxième boucle 8 et 9 correspondent respectivement à une boucle de prédiction HD et une boucle de prédiction TV.

La boucle de prédiction HD 8, et la boucle de prédiction TV 9 comportent respectivement, de l'entrée vers la sortie, un banc de filtres de synthèse, ou banc de synthèse, 12 et 13, pour reconstruire à partir de l'image pleine résolution décomposée en sous-bandes, une image au format HD pleine résolution R = 1, et une image au format TV 1/4 de résolution R = 1/4.

Les bancs de synthèses 12 et 13 sont couplées, respectivement à l'entrée d'une mémoire d'image 14 et 15 permettant de stocker les images précédente au format HD et TV. La sortie de chaque mémoire d'image 14 et 15 est couplée respectivement à une première entrée d'un dispositif de compensation de mouvement 16 et 17 permettant de recaler les images de format HD et TV en fonction d'une estimation de mouvement effectuée entre l'image source courante $I_n$ et l'image décodée précédente $I_{n-1}$ par une commande, sous la forme d'un vecteur mouvement V, arrivant sur une deuxième entrée du dispositif de compensation de mouvement 16 et 17. L'amplitude totale du vecteur mouvement V est appliquée sur le dispositif de compensation de mouvement 16 de la boucle HD, et la moitié de cette amplitude sur le dispositif de compensation de mouvement 17 de la boucle TV, du fait de la résolution de la boucle TV qui représente la moitié de la résolution de la boucle HD dans les deux directions X et Y de l'image. Les sorties de ces dispositifs 16 et 17 sont couplées respectivement à l'entrée d'un banc d'analyse 18 et 19. Les deux images au format HD et TV recalées sont alors décomposées en sous-bandes et servent de prédiction pour l'image source $I_n$ suivante.

Les sorties respectives des bancs d'analyse 18 et 19 sont couplées entre elles et couplées d'une part, sur la deuxième entrée d'opérande du soustracteur 5 et d'autre part sur la deuxième entrée d'opérande de l'additionneur 13. La troisième et la quatrième boucle 10 et 11 correspondent respectivement à une boucle au format VT et DC et comportent respectivement un banc de synthèse 20 et 21. La sortie de chaque banc de synthèse 20 et 21 est couplée respectivement à l'entrée d'une mémoire d'image 22 et 23.

Les sorties des mémoires d'image 14, 15, 22 et 23 respectives aux quatre boucles 8, 9, 10 et 11 sont couplées respectivement à une première série de quatre entrées ordonnées d'un estimateur hiérarchique de mouvement multirésolution 24.

Les sorties des quatre boucles 8, 9, 10 et 11 génèrent une première pyramide multirésolutions $P_1$ ou chaque image reconstituée dans chacune des boucles 8, 9, 10 et 11 correspond à un des quatre niveaux n = 1 à 4 de la pyramide $P_1$. Le premier niveau n = 1 correspond à l'image pleine résolution R = 1 au format HD, le deuxième niveau n = 2 à l'image 1/4 de résolution R = 1/4 au format TV, le troisième niveau n = 3 à l'image 1/16 de résolution R = 1/16 au format VT et le quatrième niveau n = 4 à l'image 1/64 de résolution R = 1/64 au format DC.

L'estimateur 24 reçoit sur une deuxième série de quatre entrées ordonnées comme la première série des quatre entrées précédentes, une deuxième pyramide multirésolution $P_2$.

La première entrée reçoit l'image source courante $I_n$ pleine résolution avant décomposition en sous-bandes par le banc d'analyse HD 2 du circuit principal de codage 1. Les trois entrées suivantes reçoivent respectivement, dans l'ordre, une image reconstituée par un banc de synthèse TV 25, un banc de synthèse VT 26 et un banc de synthèse DC 27 à partir de l'image source courante $I_n$ décomposée en MxM sous bandes par le banc d'analyse 2 du circuit principal de codage 1 injectée sur chacune de leur entrée.

Une estimation de mouvement hiérarchique est effectuée ensuite par l'estimateur 24 entre l'image source $I_n$ courante et une image source précédemment codée $I_{n-1}$. La première pyramide $P_1$ correspondant à cette dernière image décodée $I_{n-1}$ contient déjà l'image pleine résolution décodée présente dans la boucle HD 8, l'image 1/4 de résolution présente dans la boucle TV 9 et l'image DC obtenue directement à partir des coefficients du filtre de synthèse 21 de la boucle DC 11. Le codec reconstruit uniquement l'image 1/16 de résolution à partir du banc de synthèse 20 de la boucle VT 10.

La sortie de l'estimateur 24 générant un vecteur mouvement V résultant de l'estimation de mouvement effectuée à partir des deux pyramides multirésolution $P_1$ et $P_2$, est couplée d'une part à la deuxième entrée de la mémoire d'image 16 de la première boucle de prédiction HD 8 et d'autre part sur une deuxième entrée du VLC du circuit principal de codage 1. Le même vecteur V mais dont l'amplitude est divisée par deux est couplé également à la deuxième entrée de la mémoire d'image 17 de la deuxième boucle de prédiction TV 9.

L'utilisation d'un estimateur hiérarchique multirésolution dans un codec selon l'invention ne nécessite pas de modifications de la structure de l'algorithme d'estimation : les vecteurs mouvement V utilisés pour les images compatibles au format TV, sont les vecteurs des images pleine résolution, format HD, remis à l'échelle. Le champ des vecteurs V assure un recalage aussi bien pour les images pleine résolution HD que pour les images compatibles TV après mise à l'échelle des vecteurs V. Les différents niveaux n = 1 à n = 4 de la première pyramide $P_1$ sont en effet reconstitués à partir des images compatibles. En particulier, les vecteurs V estimés au dernier niveau n = 4 sont initialisés à l'aide des vecteurs calculés au niveau n = 3 précédent assurant ainsi le meilleur recalage pour l'image compatible TV. Le champ du vecteur mouvement V pleine résolution, lorsqu'il est remis à l'échelle pour le recalage de l'image compatible TV, a donc beaucoup de chance de ressembler au champ réel tel qu'il a été estimé à l'avant-dernier niveau n = 3 de la première pyramide $P_1$

Un exemple de processus d'estimation est décrit succinctement ci-après : une image source est décomposée en un nombre déterminé de blocs où chaque bloc est défini par l'intersection d'une ligne et de sa colonne respective et dont la taille reste identique pour tous les niveaux de résolution. Dans cet exemple l'estimation de mouvement doit aboutir, pour l'image pleine résolution, à un vecteur de mouvement par bloc 16x16 pour un format progressif ou 16x8 pour un format entrelacé. La recherche débute au niveau de résolution le plus faible.

L'estimateur comporte un prédicteur temporel par bloc pour initialiser la recherche ; la valeur de ce prédicteur est celle du vecteur qui correspond à un même bloc et à un même niveau de résolution lors de la précédente estimation. En début de séquence, les prédicteurs temporels sont mis à zéro. L'estimateur calcule ensuite la différence inter-images déplacée, connue sous l'abréviation anglo-saxonne DFD, correspondant à la prédiction temporelle ainsi que celle correspondant à un déplacement nul. Le vecteur dont la DFD est minimale est retenu. Ce vecteur est ensuite affiné à l'aide d'une fenêtre de recherche de taille ±x dans la direction horizontale X et ±y dans une direction verticale Y et elle est centrée sur l'extrémité du vecteur. Le vecteur corrigé produisant la DFD la plus faible est retenu et est utilisé pour initialiser la recherche au niveau de résolution suivant. Cette technique est développée notamment par P. Anandan dans un article intitulé "Computing dense displacement fields with confidence measures in scenes containing occlusions", publié dans "SPIE Vol. 521 Intelligent Robots and Computer Vision, 1986".

Pour deux niveaux successifs n-1 et n, chaque bloc du niveau supérieur n dispose de quatre prédicteurs : un prédicteur temporel et trois prédicteurs spatiaux provenant de l'estimation précédente faite au niveau inférieur n-1. A chaque bloc du niveau inférieur n-1 correspondent quatre blocs du niveau supérieur n. Le vecteur attribué à un bloc du niveau inférieur n-1 est propagé sur chacun des quatre blocs du niveau supérieur n après une mise à l'échelle du vecteur. Pour chaque bloc du niveau supérieur n, une répartition des trois prédicteurs spatiaux est déterminée.

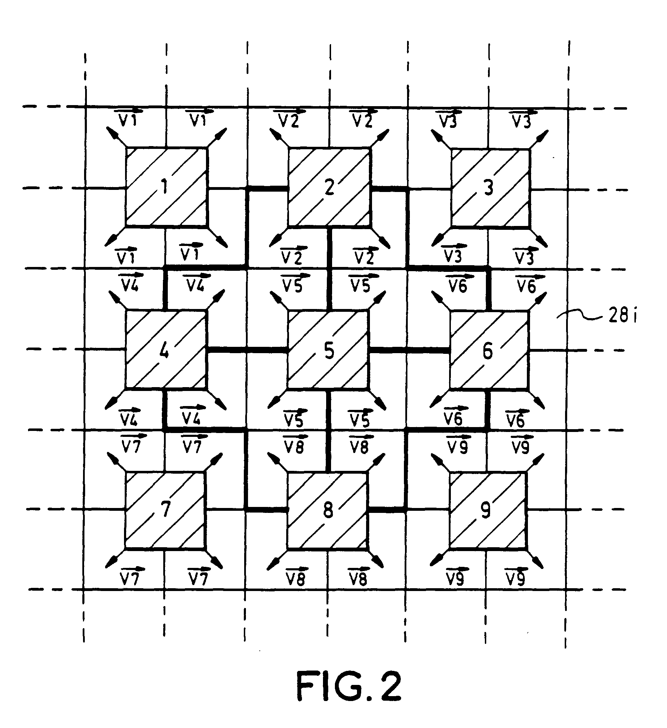

Dans l'exemple de la figure 2, neuf blocs numérotés de 1 à 9, de niveau inférieur n = 1 sont représentés hachurés. A chaque bloc 1 à 9 correspondent quatre blocs du niveau supérieur n = 2 désignés respectivement par un

même vecteur $\vec{V}_1$ à $\vec{V}_9$ : un bloc haut gauche, un bloc haut droit, un bloc bas gauche et un bloc bas droit.

Au bloc 5 correspondent quatre blocs désignés respectivement par un vecteur $\vec{V}_5$, le bloc 5 étant centré sur les quatre blocs du niveau supérieur n = 2. Trois prédicteurs spatiaux sont attribués à chacun des quatre blocs désignés par le vecteur $\vec{V}_5$. Un premier prédicteur spatial correspond respectivement à un des quatre blocs repéré par le vecteur $\vec{V}_5$ de niveau supérieur n = 2, les deux autres prédicteurs correspondent respectivement aux deux blocs adjacents au premier prédicteur. L'ensemble des 4x3 prédicteurs forment une croix sur le niveau supérieur n = 2. Le reste de la recherche se déroule de la même façon pour les autres blocs de niveau inférieur n = 1 et la même opération est effectuée pour les niveaux supérieurs suivants n = 3 et 4 ; cependant pour le niveau pleine résolution correspondant au niveau n = 4, l'estimateur n'utilise plus le prédicteur temporel et n'utilise que les trois prédicteurs spatiaux pour initialiser la recherche afin de minimiser la complexité de réalisation. Un vecteur entier par bloc 16x16, ou 16x8, est ainsi obtenu sur les quatre niveaux n = 1 à n = 4.

Pour obtenir une précision sous-pixel, il est possible d'utiliser une interpolation bilinéaire ou autre et de tester les positions correspondantes autour du vecteur entier précédemment trouvé.

L'amplitude entière maximale des vecteurs estimés à l'aide de cet estimateur hiérarchique est de :

$$\text{pour le niveau } n = 1 \qquad |V_{1x}| + x \qquad |V_{1y}| + y,$$

$$\text{pour le niveau } n = 2 \qquad 2|V_{1x}| + 3x \qquad 2|V_{1y}| + 3y,$$

$$\text{pour le niveau } n = 3 \qquad 4|V_{1x}| + 7x \qquad 4|V_{1y}| + 7y, \text{ et}$$

$$\text{pour le niveau } n = 4 \qquad 8|V_{1x}| + 15x \qquad 8|V_{1y}| + 15y$$

ou $|V_{1x}|$ et $|V_{1y}|$ représentent respectivement la norme du vecteur $V_1$ suivant la direction X et la norme du vecteur $V_1$ suivant la direction Y.

Ainsi, avec une fenêtre d'excursion $\pm 3$ pixels horizontalement et verticalement, dans le cas progressif, l'estimateur peut estimer des vecteurs dont l'amplitude peut aller jusqu'à $\pm 45$ pixels dans chaque direction. En fait, l'utilisation du prédicteur temporel au premier niveau de la pyramide autorise l'estimation de vecteur d'amplitude plus élevée ; il faut tout de même limiter à tous les niveaux de la pyramide l'amplitude maximale pouvant être estimée afin de réduire les risques de divergence de l'estimateur.

Le codec selon l'invention peut être appliqué au codage des champs de vecteurs mouvement utilisant des structures arborescentes de type "quadtree" par exemple.

Dans cette application les vecteurs utilisés pour la partie compatible doivent être directement transmis via la structure arborescente. Cette application est intéressante d'un point de vue réduction du coût de codage du champ total par rapport à un codage différentiel classique, mais un autre avantage plus intéressant encore réside dans le fait que le décodeur compatible n'est pas obligé de décoder toute l'information de mouvement mais uniquement la partie de l'arbre allant de la racine jusqu'au niveau de résolution désiré.

## Revendications

1. Codeur-décodeur pour un codage compatible sous-bande d'un signal vidéo comportant un circuit principal de codage (1) comprenant un premier banc de filtres d'analyse (2) du signal vidéo, un soustracteur (5) pour la soustraction du signal filtré avec un signal prédit, un circuit de codage (3) du signal différence pour obtenir le signal codé, un circuit de décodage (7) pour le décodage local du signal codé, un additionneur (13) du signal prédit au signal décodé, au moins deux boucles de prédiction (8,9) relatives à des résolutions d'images différentes, chacune des boucles comportant un banc de filtres de synthèse (12, 13) recevant le signal addition, une mémoire pour la mémorisation (14, 15) du signal addition filtré, un compensateur de mouvement (16, 17) recevant le signal mémorisé, le mouvement étant calculé à partir d'un estimateur de mouvement (24), un deuxième banc de filtres d'analyse (18, 19) recevant le signal compensé en mouvement, l'ensemble des signaux compensés ainsi filtrés fournissant le signal prédit, **caractérisé en ce qu'**il comporte des moyens (2,25,26,27) pour générer des images courantes de résolutions différentes, celles des images mémorisées dans les boucles de prédiction et **en ce que** l'estimateur de mouvement (24) reçoit sur une première pluralité d'entrées (P1), les images mémorisées dans les boucles de prédiction formant ainsi une première pyramide d'images multirésolution et sur une deuxième pluralité d'entrée (P2), les images courantes de résolutions correspondantes formant ainsi une deuxième pyramide d'images multirésolution, pour effectuer une estimation de mouvement hiérarchique en exploitant les images reçues de résolutions différentes en propageant le vecteur mouvement calculé pour une résolution donnée au niveau de résolution supérieur.

2.  Codeur-décodeur selon la revendication 1, **caractérisé en ce que** des images constituant la deuxième pyramide (P2) sont réalisées à partir du premier banc de filtres d'analyse (2) pour le codage sous-bande.

3.  Codeur-décodeur selon l'une des revendications précédentes, **caractérisé en ce que** l'estimateur de mouvement hiérarchique (24) comporte en outre un étage d'interpolation bilinéaire permettant une précision sous-pixel correspondant à un niveau de résolution supérieur au niveau pleine résolution de l'image source courante ($I_n$).

4.  Codeur-décodeur selon la revendication 1, **caractérisé en ce que** les moyens pour construire les deux pyramides d'images multirésolution ($P_1$ et $P_2$) comportent un premier moyen (2) pour décomposer l'image source courante ($I_n$) en un nombre pair égal de sous-bandes (M) suivant les directions horizontale (X) et verticale (Y) de l'image ($I_n$) correspondant respectivement aux lignes et aux colonnes de l'image ($I_n$), un deuxième moyen (8, 9, 10 et 11) utilisant le résultat du premier moyen (2) pour reconstituer un premier lot d'images comportant l'image décodée précédente ($I_{n-1}$) et un nombre déterminé d'images de résolution différente ordonnées suivant leur résolution et construites à partir de l'image décodée précédente ($I_{n-1}$), le premier lot d'images de résolution différente formant la première pyramide ($P_1$), et un troisième moyen (25, 26 et 27) pour reconstituer un deuxième lot d'images comportant un nombre déterminé d'images de résolution différente et ordonnées suivant leur résolution, à partir de l'image source courante ($I_n$) pleine résolution décomposées par le premier moyen (2), l'image source courante ($I_n$) et le deuxième lot d'images de résolution différente formant la deuxième pyramide ($P_2$)

5.  Codeur-décodeur selon la revendication 4, **caractérisé en ce que** le premier moyen comporte un banc de filtres d'analyse (2) à deux dimensions séparables permettant l'analyse successive de l'image source courante ($I_n$), décomposée en sous-bandes (M), suivant la direction horizontale (X) puis verticale (Y) de l'image, correspondant respectivement aux lignes et colonnes de l'image ($I_n$).

6.  Codeur-décodeur selon la revendication 4, **caractérisé en ce que** le deuxième moyen comporte un nombre déterminé de boucles de codage (8, 9,10 et 11) comportant chacune, un banc de filtres de synthèse (12, 13, 20 et 21) pour reconstituer une image dans un format déterminé, une mémoire d'image (14, 15, 22 et 23) pour mémoriser l'image reconstituée, la sortie de chaque mémoire d'image (14, 15, 22 et 23) délivrant respectivement une image de résolution déterminée par le format de la boucle (8, 9, 10 et 11) pour former la première pyramide ($P_1$).

7.  Codeur-décodeur selon la revendication 6, **caractérisé en ce qu'**un nombre déterminé de boucles de codage (8 et 9) appelées boucles de prédiction, comportent en outre, chacune, un dispositif de compensation de mouvement (16 et 17) couplé par une première entrée à la mémoire d'image (14 et 15) de la même boucle (8 et 9) et couplée par une deuxième entrée à la sortie de l'estimateur hiérarchique (24) délivrant le vecteur mouvement (V) pondéré en fonction du format de la boucle (8 et 9), et un banc de filtre d'analyse (18 et 19) décomposant à nouveau l'image issue du dispositif de compensation de mouvement (16 et 17) en sous-bandes (M), et **caractérisé en ce que** les sorties de chacune des boucles (8 et 9) sont couplées entre elles et couplées respectivement au circuit principal de codage (1) et à l'entrée des boucles de codage (8, 9,10 et 11) et délivrant respectivement un signal de prédiction (P) sur l'erreur de codage entre l'image décodée précédente ($I_{n-1}$) et l'image courante ($I_n$).

8.  Codeur-décodeur selon la revendication 4, **caractérisé en ce que** le troisième moyen comporte un nombre déterminé de bancs de filtres de synthèse (25, 26 et 27), reconstituant chacun une image de résolution différente à partir de l'image source courante ($I_n$) pleine résolution décomposée par le banc de filtres d'analyse (2).

9.  Codeur-décodeur selon l'une quelconque des revendications précédentes, **caractérisé en ce que** chaque pyramide ($P_1$ et $P_2$) comporte du niveau de résolution le plus bas au niveau le plus élevé, une première image correspondant à l'image de niveau (n = 1) de résolution R =1/64 au format DC, une deuxième image correspondant à l'image de niveau (n = 2) de résolution R = 1/16 au format VT, une troisième image correspondant à l'image de niveau (n = 3) de résolution R 1/4 au format TV, et une quatrième image correspondant à l'image de niveau (n = 4) pleine résolution R = 1 au format HD.

10. Codeur-décodeur selon la revendication 9, **caractérisé en ce que** les trois premiers niveaux (n = 1 à 3) de la deuxième pyramide ($P_2$) sont obtenus à partir de l'image source courante ($I_n$) décomposée en 64 bandes (M), 8 bandes (M) suivant les directions horizontale (X) et verticale (Y) de l'image, par le banc de filtres d'analyse (2) et reconstituée séparément respectivement par un banc de filtres de synthèse DC, VT et TV (27, 26 et 25), et **en ce que** les quatre niveaux (n = 1 à 4) de la première pyramide (P₁) sont obtenus respectivement, à partir de l'image décodée précédente (I$_{n-1}$) décomposée par le filtre d'analyse HD(2), par les quatre boucles de codage (8, 9, 10 et 11) correspondant chacune au format DC, VT, TV et HD.

**11.** Codeur-décodeur selon la revendication 10, **caractérisé en ce que** les deux premières boucles (8 et 9), respectivement au format HD et TV, sont des boucles de prédiction à compensation de mouvement.

**12.** Codeur-décodeur selon l'une quelconque des revendications précédentes, **caractérisé en ce que** les filtres d'analyse et de synthèse sont calculés en modulant un même filtre prototype passe-bas à phase linéaire, les phases de modulation à l'analyse et à la synthèse étant opposées afin d'éliminer un repliement de spectre lors de la reconstruction des images.

**13.** Application du codeur-décodeur selon l'une quelconque des revendications précédentes, au codage des champs de vecteurs mouvement (V) par des structures arborescentes, les vecteurs mouvement (V) étant transmis de la sortie de l'estimateur (24) aux boucles de prédiction (8 et 9) via une structure arborescente.

**Patentansprüche**

**1.** Koder/Dekoder für eine kompatible Teilband-Kodierung eines Videosignals mit einer Haupt-Kodierschaltung (1) mit einer ersten Bank (2) von Analysefiltern für das Videosignal, einer Subtrahierstufe (5) für die Subtraktion des gefilterten Signals von einem vorausgesagten Signal, einer Kodierschaltung (3) für das Differenzsignal zur Bildung des kodierten Signals, einer Dekodierschaltung (7) zur örtlichen Dekodierung des kodierten Signals, einer Addierstufe (13) für das vorausgesagte Signal zu dem dekodierten Signal, wenigstens zwei Voraussageschleifen (8, 9) für verschiedene Bildauflösungen, wobei jede Schleife eine Bank von Synthesefiltern (12, 13), die das Additionssignal empfangen, einen Speicher (14, 15) zur Speicherung des gefilterten Additionssignals, einen Bewegungskompensator (16, 17), der das gespeicherte Signal empfängt, enthält, wobei die Bewegung aus einem Bewegungsschätzer (24) einer zweiten Bank von Analysefiltern (18, 19) berechnet wird, die das bewegungskompensierte Signal empfangen, und alle derart gefilterten kompensierten Signale das vorausgesagte Signal bilden, **gekennzeichnet durch** Mittel (2, 25, 26, 27) zum Erzeugen von laufenden Bildern mit unterschiedlicher Auflösung, wie die in den Voraussageschleifen gespeicherten Bilder, wobei der Bewegungsschätzer (24) an mehreren ersten Eingängen (P1) die in den Voraussageschleifen gespeicherten Bilder empfängt und so eine erste Pyramide von Multiauflösungs-Bildern bildet und an mehreren zweiten Eingängen (P2) die laufenden Bilder mit den entsprechenden Auflösungen empfängt und **dadurch** eine zweite Pyramide von Multiauflösungs-Bildern bildet, um eine hierarchische Bewegungsschätzung durchzuführen, indem die empfangenen Bilder mit unterschiedlicher Auflösung ausgewertet werden und der für eine bestimmte Auflösung berechnete Bewegungsvektor bei einer höheren Auflösung weitergegeben wird.

**2.** Koder/Dekoder nach Anspruch 1, **dadurch gekennzeichnet, daß** die die zweite Pyramide (P2) darstellenden Bilder aus der ersten Bank von Analysefiltern für die Unterband-Kodierung gebildet werden.

**3.** Koder/Dekoder nach einem der vorangehenden Ansprüche, **dadurch gekennzeichnet, daß** der hierarchische Bewegungsschätzer (24) außerdem eine bilineare Interpolationsstufe enthält, die eine Unterpixel-Genauigkeit ermöglicht, die einem Auflösungswert entspricht, der größer ist als der Wert der vollen Auflösung des laufenden Quellenbildes (I$_n$).

**4.** Koder/Dekoder nach Anspruch 1, **dadurch gekennzeichnet, daß** die Mittel zum Bilden der beiden Multiauflösungs-Bildpyramiden (P₁ und P₂) erste Mittel (2) zum Zerlegen des laufenden Quellenbildes in eine gerade Zahl gleich den Unterbändern (M), die in der Horizontalrichtung (X) und in der Vertikalrichtung (Y) des Bildes (I$_n$) folgen, die jeweils den Zeilen und den Spalten des Bildes (I$_n$) entsprechen, zweite Mittel (8, 9, 10 und 11), die das Ergebnis der ersten Mittel (2) verwenden, um eine erste Menge von Bildern wiederherzustellen, die das vorangehende dekodierte Bild (I$_{n-1}$) und eine vorbestimmte Anzahl von Bildern mit einer anderen Auflösung enthalten, die entsprechend ihrer Auflösung geordnet und aus dem vorangehenden dekodierten Bild (I$_{n-1}$) gebildet sind, und daß die erste Menge von Bildern mit anderer Auflösung die erste Pyramide (P₁) bildet, und dritte Mittel (25, 26 und 27) zum Wiederherstellen einer zweiten Menge von Bildern mit einer vorbestimmten Anzahl von Bildern mit einer anderen Auflösung enthalten, die entsprechend ihrer Auflösung geordnet sind, aus der laufenden Bildquelle ($I_n$) mit voller Auflösung geordnet und durch die ersten Mittel (2) zerlegt sind, und daß die laufende Bildquelle ($I_n$) und die zweite Menge von Bildern mit anderer Auflösung die zweite Pyramide ($P_2$) bilden.

5. Koder/Dekoder nach Anspruch 4, **dadurch gekennzeichnet, daß** die ersten Mittel eine Bank von Analysefiltern (2) mit zwei trennbaren Größen enthalten, die die aufeinanderfolgende Analyse des laufenden Quellenbildes ($I_n$) ermöglichen, das in der Horizontalrichtung (X) und dann in der Vertikalrichtung (Y) des Bildes jeweils entsprechend den Zeilen und Spalten des Bildes ($I_n$) in Teilbänder (M) zerlegt ist.

6. Koder/Dekoder nach Anspruch 4, **dadurch gekennzeichnet, daß** die zweiten Mittel eine vorbestimmte Anzahl von Kodierschleifen (8, 9, 10 und 11) enthalten, von denen jede eine Bank von Synthesefiltern (12, 13, 20 und 21) enthält, um ein Bild in einem vorbestimmten Format wiederherzustellen, einen Bildspeicher (14, 15, 22 und 23) zum Speichern des wiederhergestellten Bildes enthält, und daß der Ausgang jedes Bildspeichers (14, 15, 22 und 23) jeweils ein Bild mit einer Auflösung liefert, die durch das Format der Schleife (8, 9, 10 und 11) bestimmt ist, um die erste Pyramide ($P_1$) zu bilden.

7. Koder/Dekoder nach Anspruch 6, **dadurch gekennzeichnet, daß** eine vorbestimmte Anzahl von Kodierschleifen (8 und 9), die mit Voraussageschleifen bezeichnet werden, außerdem jede eine Vorrichtung zur Bewegungskompensation (16 und 17), die über einen ersten Eingang mit dem Bildspeicher (14 und 15) derselben Schleife (8 und 9) und über einen zweiten Eingang mit dem Ausgang der hierarchischen Schätzeinheit (24) verbunden ist, die den Bewegungsvektor (V) liefert, der in Abhängigkeit von dem Format der Schleife (8 und 9) gewichtet ist, und eine Bank von Analysefiltern (18 und 19) enthält, die das Bild von der Vorrichtung zur Bewegungskompensation (16 und 17) erneut in Teilbänder (M) zerlegt, **dadurch gekennzeichnet, daß** die Ausgänge jeder der Schleifen (8 und 9) miteinander und jeweils mit einer Haupt-Kodierschaltung (1) und mit dem Eingang der Kodierschleifen (8, 9, 10 und 11) verbunden sind und jeweils ein Voraussagesignal (P) für den Kodierfehler zwischen dem vorangehenden dekodierten Bild ($I_{n-1}$) und dem laufenden Bild ($I_n$) liefern.

8. Koder/Dekoder nach Anspruch 4, **dadurch gekennzeichnet, daß** die dritten Mittel eine vorbestimmte Anzahl von Banken von Synthesefiltern (25, 26 und 27) enthalten, von denen jedes ein Bild mit einer anderen Auflösung aus dem laufenden Quellenbild ($I_n$) mit voller Auflösung wiederherstellt, die durch die Bank von Analysefiltern (2) zerlegt ist.

9. Koder/Dekoder nach einem der vorangehenden Ansprüche, **dadurch gekennzeichnet, daß** jede Pyramide ($P_1$ und $P_2$) von dem niedrigsten Auflösungswert bis zu dem höchsten Auflösungswert ein erstes Bild enthält, das einem Bild mit dem Wert (n = 1) der Auflösung R=1/64 im Gleichspannungsformat entspricht, einem zweiten Bild, das einem Bild mit dem Wert (n = 2) der Auflösung R=1/16 im Format VT entspricht, einem dritten Bild, das einem Bild mit dem Wert (n = 3) der Auflösung R=1/4 im TV-Format entspricht, und einem vierten Bild, das einem Bild mit dem Wert (n = 4) der vollen Auflösung R=1 im HD-Format entspricht.

10. Koder/Dekoder nach Anspruch 9, **dadurch gekennzeichnet, daß** die drei ersten Werte (n=1 bis 3) der zweiten Pyramide ($P_2$) aus dem laufenden Quellenbild ($I_n$) gewonnen werden, das in 64 Bänder (M), 8 Bänder (M) in der Horizontalrichtung (X) und in der Vertikalrichtung (Y) des Bildes, durch die Bank von Analysefiltern (2) zerlegt ist und jeweils getrennt durch eine Bank von Synthesefiltern DC, VT und TV (27, 26 und 25) wiederhergestellt ist, und daß die vier Werte (n=1 bis 4) der ersten Pyramide ($P_1$) jeweils aus dem vorangehenden dekodierten Bild ($I_{n-1}$) gewonnen werden, das durch das Analysefilter HD (2), durch die vier Kodierschleifen (8, 9, 10 und 11) zerlegt ist, von denen jede dem Format DC, VT, TV bzw. HD entspricht.

11. Koder/Dekoder nach Anspruch 10, **dadurch gekennzeichnet, daß** die beiden ersten Schleifen (8 und 9) im Format HD bzw. TV Voraussageschleifen mit einer Bewegungskompensation sind.

12. Koder/Dekoder nach einem der vorangehenden Ansprüche, **dadurch gekennzeichnet, daß** die Analysefilter und die Synthesefilter dadurch berechnet werden, indem derselbe Tiefpaß-Filter-Prototyp mit linearer Phase moduliert wird, wobei die Modulationsphasen bei der Analyse und bei der Synthese entgegensetzt sind, um einen Abbau des Spektrums bei der Wiederherstellung der Bilder zu eliminieren.

13. Anwendung des Koders/Dekoders nach einem der vorangehenden Ansprüche bei der Kodierung von Feldern von Bewegungsvektoren (V) durch Baumstrukturen, wobei die Bewegungsvektoren (V) von dem Ausgang der Schätzeinheit (24) über eine Baumstruktur zu den Voaraussageschleifen (8 und 9) übertragen werden.

**Claims**

1. Coder-decoder for a sub-band compatible coding of a video signal of the type including a main coding circuit (1) comprising a first bank of analysis filters (2) of the video signal, a subtractor (5) to subtract a predicted signal from the filtered signal, a coding circuit (3) to code the difference signal to obtain the coded signal, a decoding circuit (7) to decode locally the coded signal, an adder (13) to add the predicted signal to the decoded signal, at least two prediction loops (8,9) relative to different image resolutions, each of the loops comprising a bank of synthesis filters (12, 13) receiving the filtered sum signal, a memory to memorise (14,15) the filtered sum signal, a motion compensator (16,17) receiving the memorised signal, the motion being calculated from a motion estimator (24), a second bank of analysis filters (18, 19) receiving the motion compensated signal, the so filtered motion compensated signals providing the predicted signal, **characterised in that** it comprises means (2, 25, 26, 27) to generate current images with different resolutions, the ones of the images memorized in the prediction loops, and **in that** the motion estimator (24) receives on a first plurality of inputs (P1), the images memorized in the prediction loops making up a first multiresolution image pyramid and on a second plurality of inputs (P2), the current images with the corresponding resolution making up a second multiresolution image pyramid, to perform a hierarchical motion estimation by exploiting the received images with different resolutions by propagating the motion vector calculated for a given resolution level to the upper resolution level.

2. Coder-decoder according to claim 1, **characterized in that** the images making up the second pyramid (P2) are obtained through the first bank of analysis filters (2) for the sub-band coding.

3. Coder-decoder according to Claim 1, **characterized in that** the hierarchical motion estimator (24) furthermore includes a bilinear interpolation stage allowing sub-pixel accuracy corresponding to a level of resolution greater than the full resolution level of the current source image (In).

4. Coder-decoder according to claim 1, **characterized in that** the means for constructing the two multiresolution image pyramids (P1 and P2) include a first means (2) for splitting the current source image (In) into an equal even number of sub-bands (M) along the horizontal (X) and vertical (Y) directions of the image (In) corresponding respectively to the rows and columns of the image (In), a second means (8, 9, 10 and 11) using the result from the first means (2) to reconstruct a first batch of images which includes the preceding decoded image ($I_{n-1}$) and a specified number of images of unlike resolution ordered according to their resolution and constructed from the preceding decoded image (In-1), the first batch of images of unlike resolution forming the first pyramid (P1), and a third means (25, 26 and 27) for reconstructing a second batch of images including a specified number of images of unlike resolution ordered according to their resolution, from the full resolution current source image (In) which are split by the first means (2), the current source image (In) and the second batch of images of unlike resolution forming the second pyramid (P2).

5. Coder-decoder according to Claim 4, **characterized in that** the first means includes a bank of two-dimensional separable analysis filters (2) allowing successive analysis of the current source image (In), split into sub-bands (M) along the horizontal (X) then vertical (Y) directions of the image, corresponding respectively to the rows and columns of the image (In).

6. Coder-decoder according to Claim 4, **characterized in that** the second means includes a specified number of coding loops (8, 9, 10 and 11), each including a bank of synthesis filters (12, 13, 20 and 21) for reconstructing an image in a specified format, an image memory (14, 15, 22 and 23) for storing the reconstructed image, the output of each image memory (14, 15, 22 and 23) delivering respectively an image with resolution determined by the format of the loop (8, 9, 10 and 11) so as to form the first pyramid (P1).

7. Coder-decoder according to Claim 6, **characterized in that** a specified number of coding loops (8 and 9), termed prediction loops, furthermore each includes a motion compensation device (16 and 17) coupled via a first input to the image memory (14 and 15) of the same loop (8 and 9) and coupled via a second input to the output of the hierarchical estimator (24) delivering the motion vector (V) weighed as a function of the format of the loop (8 and 9), and an analysis filter bank (18 and 19) resplitting the image leaving the motion compensation device (16 and 17) into subbands (M), and **characterized in that** the outputs of each of the loops (8 and 9) are coupled together and coupled respectively to the main coding circuit (1) and to the input of the coding loops (8, 9, 10 and 11) and respectively delivering a prediction signal (P) relating to the coding error between the preceding decoded image ($I_{n-1}$) and the current image (In).

8. Coder-decoder according to Claim 4, **characterized in that** the third means includes a specified number of banks of synthesis filters (25, 26 and 27), each reconstructing an image of unlike resolution from the full resolution current source image (In) split by the bank of analysis filters (2).

9. Coder-decoder according to any one of the previous claims, **characterized in that** each pyramid (P1 and P2) includes from the lowest to the highest level of resolution, a first image corresponding to the image of level (n = 1) of resolution R = 1/64 with the DC format, a second image corresponding to the image of level (n = 2) of resolution R = 1/16 with the VT format, a third image corresponding to the image of level n = 3 of resolution R = 1/4 with the TV format, and a fourth image corresponding to the image of level (n = 4) of full resolution R = 1 with the HD format.

10. Coder-decoder according to Claim 9, **characterized in that** the first three levels (n = 1 to 3) of the second pyramid (P2) are obtained from the current source image (In) split into 64 bands (M), 8 bands (M) along the horizontal (X) and vertical (Y) directions of the image, by the bank of analysis filters (2)and reconstructed separately respectively by a bank of DC, VT and TV synthesis filters (27,26 and 25), and **in that** the four levels (n = 1 to 4) of the first pyramid (P1) are obtained respectively, from the preceding decoded image ($I_{n-1}$) split by the HD analysis filter (2), by the four coding loops (8, 9, 10 and 11) each corresponding to the DC, VT, TV and HD format.

11. Coder-decoder according to Claim 10, **characterized in that** the first two loops (8 and 9), with the HD and TV format respectively, are motion-compensation prediction loops.

12. Coder-decoder according to any one of the previous claims, **characterized in that** the analysis and synthesis filters are computed by modulating the same linear-phase low-pass prototype filter, the modulating phases on analysis and on synthesis being opposites so as to eliminate spectral aliasing during reconstruction of the images.

13. Application of the coder-decoder according to any one of the previous claims, to the coding of fields of motion vectors (V) by tree structures, the motion vectors (V) being transmitted from the output of the estimator (24) to the prediction loops (8 and 9) via a tree structure.

FIG.1

FIG.2